# EUROPÄISCHE PATENTSCHRIFT

(11) **EP 2 668 429 B1**
(45) Veröffentlichungstag und Bekanntmachung des Hinweises auf die Patenterteilung: **18.11.2015**
(21) Anmeldenummer: 12703008.8
(22) Anmeldetag: 26.01.2012
(51) Int. Cl.: F16L 3/223

(54) **VORRICHTUNG ZUM FIXIEREN VON LÄNGLICHEN GEGENSTÄNDEN**
DEVICE FOR FASTENING ELONGATE OBJECTS
DISPOSITIF DESTINÉ À FIXER DES OBJETS OBLONGS

(30) Priorität: 27.01.2011 DE 102011009496
(43) Veröffentlichungstag der Anmeldung: 04.12.2013
(73) Patentinhaber: A. RAYMOND et Cie, 38000 Grenoble (FR)
(72) Erfinder: MARINI, Alexander, 79618 Rheinfelden (DE); JUNGE, Andy, 79400 Kandern (DE); NICOLAI, Manuela, 79725 Laufenburg (DE)
(74) Vertreter: RACKETTE Patentanwälte PartG mbB
(86) Internationale Anmeldenummer: PCT/EP2012/051234
(87) Internationale Veröffentlichungsnummer: WO 2012/101216

(56) Entgegenhaltungen:
- DE-C1- 3 441 302
- US-A- 3 287 776
- US-A- 3 856 246
- US-A- 5 104 072
- US-A- 5 992 802

## Beschreibung

Die Erfindung betrifft eine Vorrichtung zum Fixieren von länglichen Gegenständen gemäß dem Oberbegriff des Patentanspruches 1.

Eine derartige Vorrichtung ist aus DE 34 41 302 C1 bekannt. Die vorbekannte Vorrichtung zum Fixieren von länglichen Gegenständen, die hier als Aufzugsselle aufgeführt sind, verfügt über einen ersten Randarm und über einen zweiten Randarm, die miteinander verbindbar sind. Bei dieser Vorrichtung weisen beide Randarme eine Anzahl von durch Seitenschenkel begrenzte Aufnahmeräume zum Aufnehmen von länglichen Gegenständen auf, die in verbundener Anordnung der Randarme geschlossen sind. Weiterhin ist ein Innenarm vorhanden, der zwischen den Randarmen angeordnet ist und der durch Seitenschenkel begrenzte Aufnahmeräume zum Aufnehmen von länglichen Gegenständen aufweist. Die Randarme sowie der Innenarm sind über eine Scharnieranordnung schwenkbar miteinander verbunden. Die Randarme sowie der Innenarm sind über jeweils eine der Scharnieranordnung gegenüber liegende Rastverbindung miteinander verbindbar.

Weitere Vorrichtungen zum Fixieren von länglichen Gegenständen mit Randarmen und einem zwischen den Randarmen angeordneten Innenarm sind aus US-A-3,287,776, US-A-5,104,072, US-A-3,856,246 und US-A-5,992,802 bekannt.

Eine weitere Vorrichtung zum Fixieren von länglichen Gegenständen wie Leitungen ist aus DE 195 46 086 A1 bekannt. Diese vorbekannte Vorrichtung verfügt über einen ersten Randarm und über einen zweiten Randarm, die an einer Randseite über ein Scharnier schwenkbar miteinander verbunden und auf einer dem Scharnier gegenüber liegenden Randseite über eine Rastverbindung miteinander verbindbar sind. Ein Randarm weist eine Anzahl von durch Seitenschenkel begrenzte Aufnahmeräume zum Aufnehmen von länglichen Gegenständen auf, die in verbundener Anordnung der Randarme geschlossen sind. Dadurch sind die länglichen Gegenstände fixiert.

Der Erfindung liegt die Aufgabe zugrunde, eine Vorrichtung der eingangs genannten Art anzugeben, die sich bei einer verhältnismäßig einfachen Handhabung sowie einem kompakten Aufbau durch ein sehr stabiles Fixieren einer verhältnismäßig großen Anzahl von länglichen Gegenständen bereits während des Bestückens auszeichnet.

Diese Aufgabe wird bei einer Vorrichtung der eingangs genannten Art erfindungsgemäß mit den kennzeichnenden Merkmalen des Patentanspruches 1 gelöst.

Dadurch, dass bei der erfindungsgemäßen Vorrichtung wenigstens ein zwischen den Randarmen angeordneter und mit durch Seitenschenkel begrenzte Aufnahmeräume zum Aufnehmen von länglichen Gegenständen ausgestatteter Innenarm vorhanden ist, ist die Aufnahmekapazität der Vorrichtung unter Beibehalten einer verhältnismäßig einfachen montagefreundlichen Handhabung über das auch nacheinander mögliche Verbinden der Randarme sowie bei einem weiterhin kompakten Aufbau bei einer sehr guten Fixierung durch die endseitigen Rastverbindungen und durch den wechselseitigen Eingriff der Schürzenaufnahmen sowie der Anschlagschürzen sehr hoch.

Weitere zweckmäßige Ausgestaltungen der Erfindung ergeben sich aus den Unteransprüchen.

Weitere zweckmäßige Ausgestaltungen und Vorteile der Erfindung sind Gegenstand der nachfolgenden Beschreibung von Ausführungsbeispielen mit Bezug auf die Figuren der Zeichnung.

Es zeigen:
- Fig. 1: in einer perspektivischen Ansicht ein erstes Ausführungsbeispiel einer erfindungsgemäßen Vorrichtung,
- Fig. 2: das Ausführungsbeispiel gemäß Fig. 1 in einer Seitenansicht,
- Fig. 3: das Ausführungsbeispiel gemäß Fig. 1 in einem Längsschnitt,
- Fig. 4: in einer perspektivischen Ansicht ein weiteres Ausführungsbeispiel einer erfindungsgemäßen Vorrichtung,
- Fig. 5: das Ausführungsbeispiel gemäß Fig. 4 in einer Seitenansicht und
- Fig. 6: das Ausführungsbeispiel gemäß Fig. 4 in einem Längsschnitt.

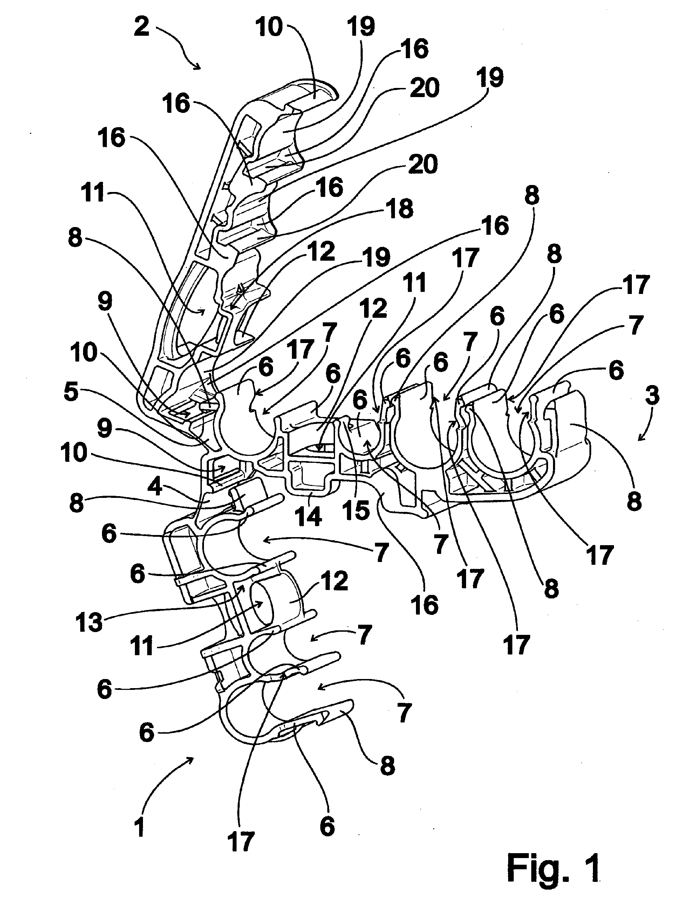

Fig. 1 zeigt in einer perspektivischen Ansicht ein Ausführungsbeispiel einer erfindungsgemäßen Vorrichtung zum Fixieren von länglichen, insbesondere auch relativ schweren Gegenständen wie beispielsweise Hydraulikleitungen oder Bremsleitungen, wie sie beispielsweise bei landwirtschaftlichen Nutzfahrzeugen in einer verhältnismäßig hohen Anzahl an einem Trägerteil wie einem Fahrzeugrahmen anzubringen sind. Das zweckmäßigerweise aus einem hartelastischen Kunststoff hergestellte Ausführungsbeispiel gemäß Fig. 1 verfügt über einen länglichen ersten Randarm 1, über einenlänglichen zweiten Randarm 2 und über einen länglichen Innenarm 3, der zwischen den Randarmen 1, 2 angeordnet ist. Der erste Randarm 1 ist mit dem Innenarm 3 über ein erstes Scharnier 4 verbunden, während der zweite Randarm 2 mit dem Innenarm 3 über ein zweites Scharnier 5 in Verbindung steht. Die eine Scharnieranordnung bildenden Scharniere 4, 5 sind vorteilhafterweise als Filmscharniere ausgeführt und gestatten ein Schwenken der Randarme 1, 2 relativ zu dem Innenarm 3.

Der erste Randarm 1 verfügt über eine Anzahl von Seitenschenkeln 6, die paarweise seitlich und im Bodenbereich Aufnahmeräume 7 begrenzen, die zum Aufnehmen von in Fig. 1 nicht dargestelltenlänglichen Gegenständen, die sich in Querrichtung zu dem ersten Randarm 1 erstrecken, ausgebildet sind. Ein auf der dem ersten Scharnier 4 gegenüber liegenden Randseite des ersten Randarmes 1 angeordneter Seitenschenkel 6 ist mit einem nach außen gewandten Rasthaken 8 als ein Element einer außenseitigen Rastverbindung ausgebildet. An einem dem ersten Scharnier 4 gegenüber liegenden Seitenschenkel 6 ist ein weiterer Rasthaken 8 als ein Element einer scharnierseitigen Rastverbindung ausgebildet, der sich von diesem Seitenschenkel 6 weg nach außen in Richtung des ersten Scharnieres 4 erstreckt. Zwischen dem ersten Scharnier 4 und dem Innenarm 3 ist eine Rasthakendurchgriffsausnehmung 9 ausgebildet, an deren bei diesem Ausführungsbeispiel dem ersten Scharnier 4 zugewandten Randseite als weiteres Element der scharnierseitigen Rastverbindung ein einseitig wirkender Raststeg 10 vorhanden ist.

Etwa im Mittenbereich des ersten Randarmes 1 ist eine Durchbruchausnehmung 11 vorhanden, die auf ihrer dem Innenarm 3 zugewandten Seite von einer sich in etwa über den halben Umfang der Durchbruchausnehmung 11 erstreckenden Randwand 12 begrenzt ist. Auf der der Randwand 12 gegenüber liegenden Seite verfügt der erste Randarm 1 über eine Randbügelaufnahme 13.

Der Innenarm 3 weist an seiner dem ersten Randarm 1 abgewandten und dem zweiten Randarm 2 zugewandten Seite ebenfalls eine Anzahl von paarweise einen Aufnahmeraum 7 begrenzende Seitenschenkel 6 sowie eine Durchbruchausnehmung 11 auf, die auf der dem zweiten Randarm 2 zugewandten Seite von einer Randwand 12 begrenzt ist. Auf der dem ersten Randarm 1 zugewandten Seite der Durchbruchausnehmung 11 des Innenarmes 3 ist ein in Richtung des ersten Randarmes 1 auskragender Randbügel 14 ausgebildet, der entsprechend der Form der Randbügelaufnahme 13 ausgebildet ist. Weiterhin ist im Bereich der Durchbruchausnehmung 11 des Innenarmes 3 an einem Seitenschenkel 6 ein Stabilisierzapfen 15 vorhanden, der sich in Richtung des zweiten Randarmes 2 erstreckt.

Auf der dem zweiten Scharnier 5 abgewandten Randseite trägt der Innenarm 3 einen Rasthaken 8 einer weiteren außenseitigen Rastverbindung, während an einem dem zweiten Scharnier 5 zugewandten Seitenschenkel 6 des Innenarmes 3 ein Rasthaken 8 einer weiteren scharnierseitigen Rastverbindung angeformt ist, der sich von dem Seitenschenkel 6 weg in Richtung des zweiten Scharnieres 5 erstreckt. Zwischen dem zweiten Scharnier 5 und dem zweiten Randarm 2 ist eine weitere Rasthakendurchgriffsausnehmung 9 ausgebildet, an deren dem zweiten Scharnier 5 zugewandten Randseite ein einseitig wirkender Raststeg 10 als weiteres Element der weiteren scharnierseitigen Rastverbindung ausgebildet ist.

Auf der dem ersten Randarm 1 zugewandten Seite des Innenarmes 3 ist auf der dem ersten Scharnier 4 gegenüber liegenden Seite des Randbügels 14 eine sich über einen Umfang von etwa 90 Grad erstreckende Anschlagschürze 16 ausgebildet, die stegartig vorspringt und in zusammengefügter Anordnung des ersten Randarmes 1 und des Innenarmes 3 zum Eingriff in eine in dem gegenüber liegenden Seitenschenkel 6 des ersten Innenarmes 1 ausgebildeten Schürzenaufnahme 17 ausgebildet ist.

Der zweite Randarm 2 verfügt ebenfalls über eine Durchbruchausnehmung 11, die bereichsweise von einer Randwand 12 begrenzt ist, die der an dem Innenarm 3 ausgebildeten Randwand 12 in radialer Richtung gegenüber liegt. In der Randwand 12 des zweiten Randarmes 2 ist eine Stabilisierzapfenaufnahme 18 eingeformt, die so angeordnet und dimensioniert ist, dass in zusammengefügter Anordnung des zweiten Randarmes 2 und des Innenarmes 3 der an dem dritten Innenarm 3 ausgebildete Stabilisierzapfen 15 in der Stabilisierzapfenaufnahme 18 angeordnet ist. An dem zweiten Randarm 2 sind den an dem Innenarm 3 ausgebildeten Aufnahmeräumen 7 gegenüber liegende Deckwände 19 ausgebildet, zwischen denen im Mittenbereich zwischen an dem Innenarm 3 ausgebildeten Seitenschenkeln 6 beziehungsweise dem außenseitigen Rasthaken 8 angeordnete beidseitig wirkende Raststege 20 vorhanden sind.

Weiterhin verfügt der zweite Rastarm 2 über abwechselnd randseitig angeordnete Anschlagschürzen 16, die zum Eingriff in an Seitenschenkeln 6 des Innenarmes 3 ausgebildeten zugeordneten Schürzenaufnahmen 17 eingerichtet sind. Ein weiterer einseitig wirkender Raststeg 10 ist an der dem zweiten Scharnier 5 abgewandten Randseite des zweiten Randarmes 2 vorhanden, der zum Eingriff zwischen den außenseitigen Seitenschenkeln 6 und dem außenseitigen Rasthaken 8 des Innenarmes 3 ausgebildet ist.

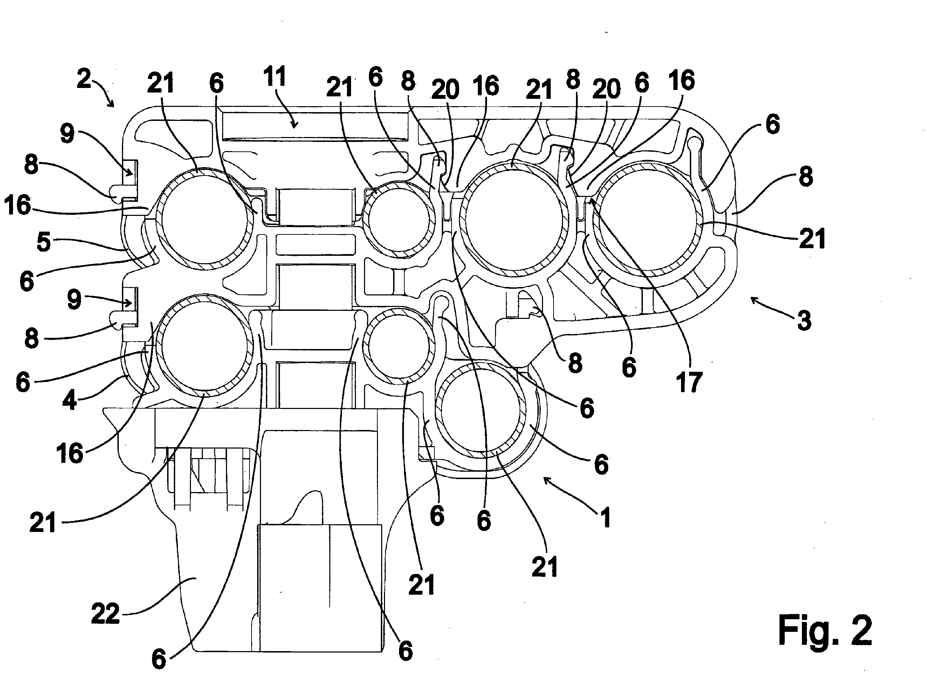

Fig. 2 zeigt in einer Seitenansicht das Ausführungsbeispiel einer erfindungsgemäßen Vorrichtung gemäß Fig. 1 in einer zusammengefügten Anordnung der Randarme 1, 2 und des Innenarmes 3 mit in den Aufnahmeräumen 7 angeordneten länglichen Gegenständen 21 in einer Endmontageposition an einem Trägerteil 22. Aus Fig. 2 ist ersichtlich, dass die Rasthaken 8 der scharnierseitigen Rastverbindungen die Rasthakendurchgriffsausnehmungen 9 durchgreifen und die Raststege 20 in Eingriff mit den an den Seitenschenkeln 6 ausgebildeten Rasthaken 8. Der an dem ersten Randarm 1 ausgebildete Rasthaken 8 der außenseitigen Rastverbindung hintergreift ebenfalls einen Raststeg 10, der an dem Innenarm 3 ausgebildet ist.

Zum Einnehmen der Endmontageposition gemäß Fig. 2 werden zunächst die länglichen Gegenstände 21 in der aufgeklappten Anordnung der Randarme 1, 2 und des Innenarmes 3 gemäß Fig. 1 in die Aufnahmeräume 7 zwischen vorzugsweise aufeinander zu geneigte Seitenschenkel 6 einschnappend vorfixiert eingelegt und dann die Randarme 1, 2 in Bezug auf den Innenarm 3 in die Endmontageposition gemäß Fig. 2 in manuell sehr einfach durchführbarer Art und Weise geschwenkt. Durch den mehrlagigen Aufbau der Randarme 1, 2 und des Innenarmes 3 ergibt sich dabei ein sehr kompakter Aufbau, der durch den Eingriff der Anschlagschürzen 16 mit den Schürzenaufnahmen 17 beidseitig der Seitenschenkel 6 gegenüber einem Verschieben in Längsrichtung der länglichen Gegenstände 21 sehr widerstandsfähig ist.

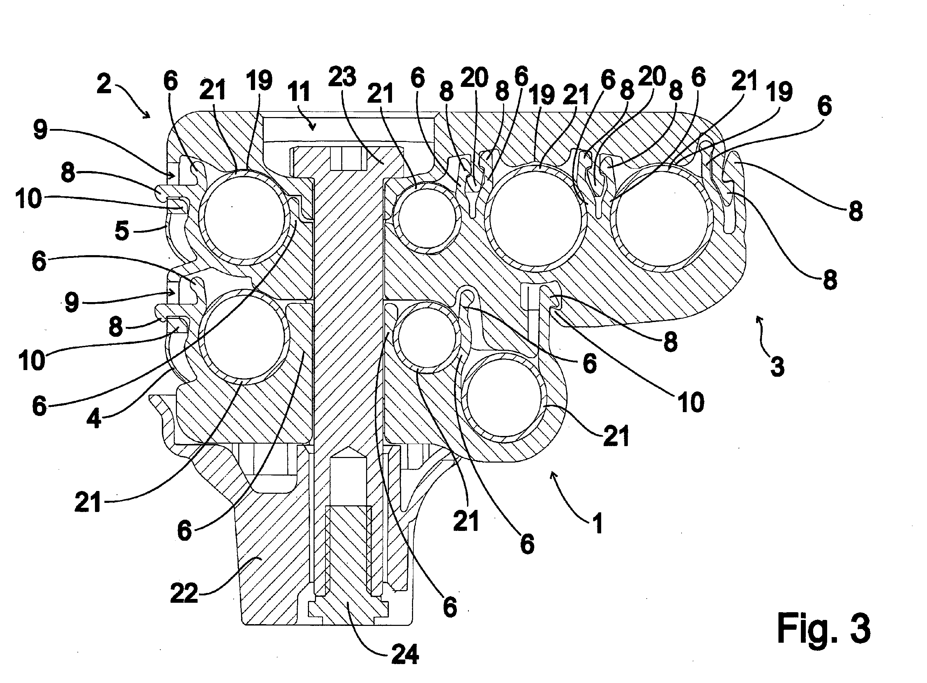

Fig. 3 zeigt das Ausführungsbeispiel einer erfindungsgemäßen Vorrichtung gemäß Fig. 1 in der Endmontageposition gemäß Fig. 2 in einem Längsschnitt durch die Randarme 1, 2 und den Innenarm 3. Aus Fig. 3 ist ersichtlich, dass zum Befestigen der erfindungsgemäßen Vorrichtung an dem Trägerteil 22 eine stirnseitig mit einem Innengewinde versehene Hohlschraube 23 durch die Durchbruchausnehmungen 11 der Randarme 1, 2 und des Innenarmes 3 durchgesteckt und auf einen mit einem Außengewinde versehenen Bolzenabschnitt eines Befestigungsbolzens 24 aufgeschraubt ist. Dadurch sind die länglichen Gegenstände 21 sehr stabil in zwei Ebenen kompakt an dem Trägerteil 22 befestigt.

Bei Anordnen von mehreren erfindungsgemäßen Vorrichtungen an einem Bündel von verhältnismäßig langen länglichen Gegenständen lassen sich die länglichen Gegenstände in fester räumlicher Anordnung zueinander sehr einfach als eine Baueinheit an einem Trägerteil 22 befestigen. Aufgrund der insbesondere auch durch Eingriff von Raststegen 20 zwischen benachbarten Rasthaken 8 mit Andruck der Rasthaken 8 gegen die an ihnen anliegenden länglichen Gegenständen 21 klemmenden Fixierung der länglichen Gegenstände 21 in den erfindungsgemäßen Vorrichtungen sind überdies Verschiebungen in Längsrichtung sowie ein Verdrehen der länglichen Gegenstände 21 um die Längsachse verhindert oder zumindest erheblich erschwert. Weiterhin ist aufgrund des vielfachen Eingriffes von Rasthaken 8 mit Raststegen 10, 20 ein unbeabsichtigtes Öffnen einer erfindungsgemäßen Vorrichtung so gut wie ausgeschlossen.

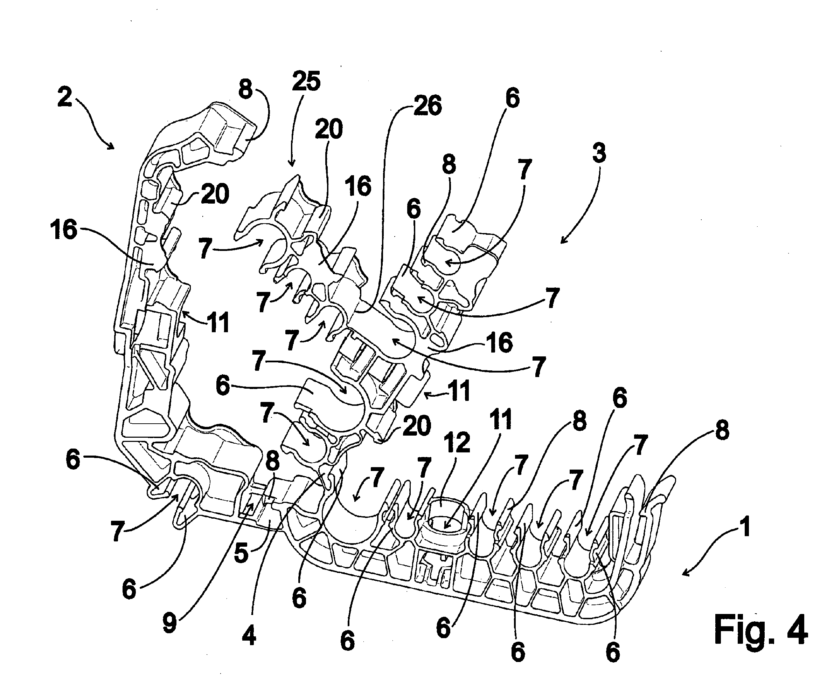

Fig. 4 zeigt in einer perspektivischen Ansicht ein weiteres Ausführungsbeispiel einer erfindungsgemäßen Vorrichtung, wobei sich bei dem Ausführungsbeispiel gemäß Fig. 1 bis Fig. 3 und bei dem Ausführungsbeispiel gemäß Fig. 4 einander entsprechende Elemente mit den gleichen Bezugszeichen versehen und im weiteren nicht näher erläutert sind. Bei dem weiteren Ausführungsbeispiel gemäß Fig. 4 ist das erste Scharnier 4 zwischen dem ersten Randarm 1 und dem Innenarm 3 ausgebildet, während das zweite Scharnier 5 zwischen dem ersten Randarm 1 und dem zweiten Randarm 2 vorhanden ist. Bei dem weiteren Ausführungsbeispiel gemäß Fig. 4 erstrecken sich die Anschlagschürzen 16 über einen Umfangsabschnitt, der zwei einen Aufnahmeraum 7 begrenzende Seitenschenkel 6 überdeckt, so dass eine besonders hohe Scherstabilität erzielt ist. Des weiteren lässt sich der Darstellung gemäß Fig. 4 entnehmen, dass bei dem weiteren Ausführungsbeispiel ein Seitenarm 25 vorhanden ist, der über ein drittes Scharnier 26 auf der dem ersten Scharnier 4 abgewandten Seite der Durchbruchausnehmung 11 des Innenarmes 3 an einem Seitenschenkel 6 des Innenarmes 3 angeformt und in Richtung der der Durchbruchausnehmung 11 abgewandten Seite auf den Innenarm 3 schwenkbar ist.

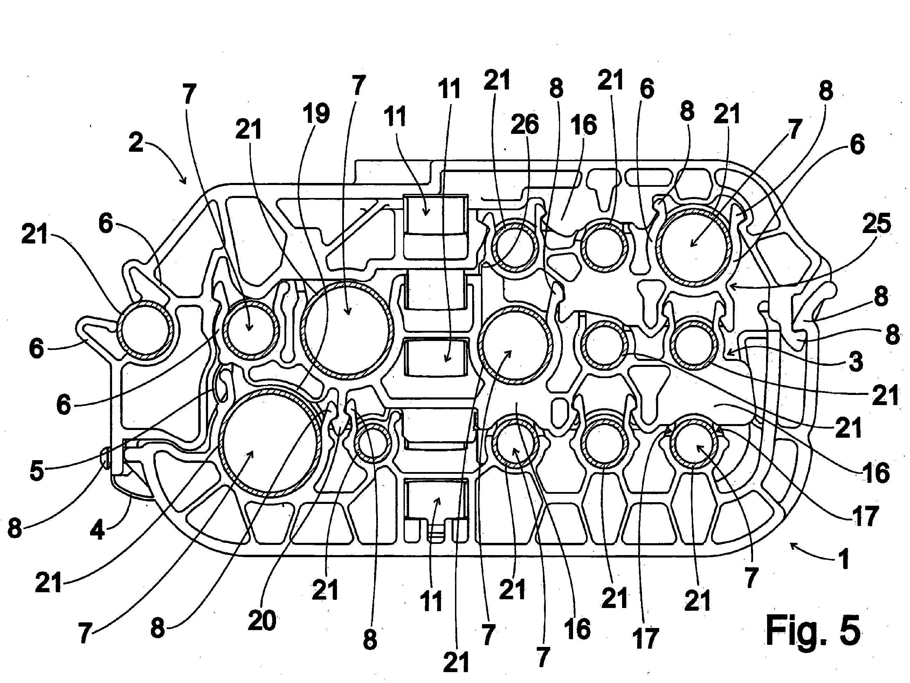

Fig. 5 zeigt in einer Seitenansicht das weitere Ausführungsbeispiel gemäß Fig. 4 mit in den Aufnahmeräumen 7 angeordneten länglichen Gegenständen 21. Aus Fig. 5 ist ersichtlich, dass bei dem weiteren Ausführungsbeispiel die länglichen Gegenstände 21 nunmehr in drei Ebenen sehr stabil und kompakt angeordnet sind.

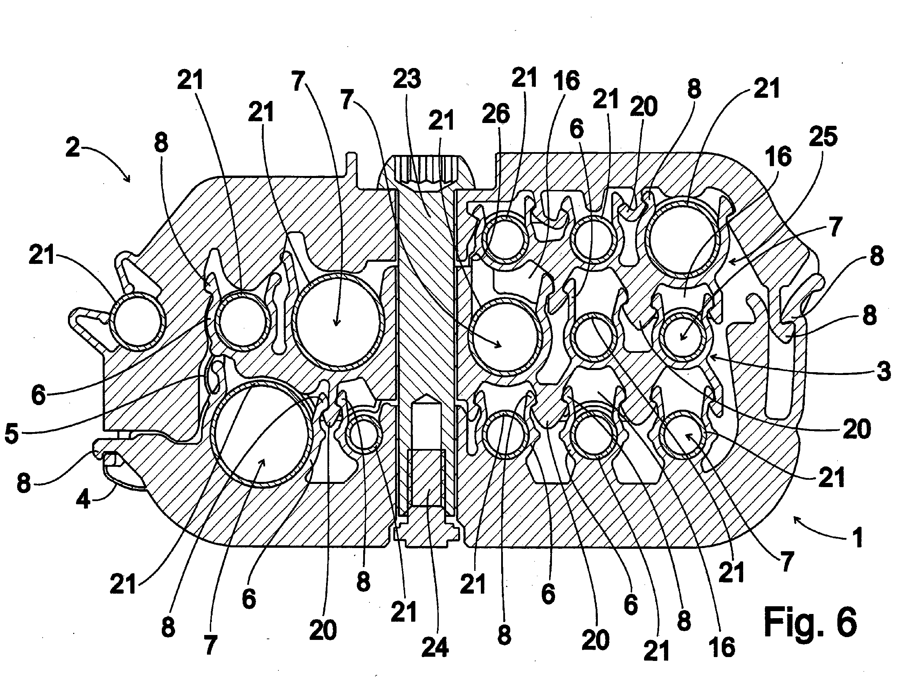

Fig. 6 zeigt das weitere Ausführungsbeispiel gemäß Fig. 4 in zusammengefügter Anordnung der Randarme 1, 2 des Innenarmes 3 und des Seitenarmes 25 gemäß Fig. 5 in einem Längsschnitt durch die Randarme 1, 2, den Innenarm 3 und den Seitenarm 25. Aus Fig. 6 lässt sich besonders gut der vielfache wechselseitige Eingriff von Rasthaken 8 und Raststegen 10, 20 erkennen, der bereits vor einem Verbinden des weiteren Ausführungsbeispieles an einem mit einem Außengewinde versehenen Bolzenabschnitt eines Befestigungsbolzens 24 durch eine Hohlschraube 23 eine stabile wechselseitige Fixierung der Randarme 1, 2, des Innenarmes 3 und des Seitenarmes 25 gewährleistet.

## Patentansprüche

1. Vorrichtung zum Fixieren von länglichen Gegenständen (21) mit einem ersten Randarm (1) und mit einem zweiten Randarm (2), die miteinander verbindbar sind, wobei wenigstens ein Innenarm (3) vorhanden ist, der zwischen den Randarmen (1, 2) angeordnet ist und der durch Seitenschenkel (6) begrenzte Aufnahmeräume (7) zum Aufnehmen von länglichen Gegenständen (21) aufweist, wobei die Randarme (1, 2) sowie der oder jeder Innenarm (3) über eine Scharnieranordnung (4, 5) schwenkbar miteinander verbunden sind, wobei die Randarme (1, 2) sowie der oder jeder Innenarm (3) über jeweils eine der Scharnieranordnung (4, 5) gegenüber liegende Rastverbindung (8, 10, 20) miteinander verbindbar sind und wobei im Bereich der Scharnieranordnung (4, 5) weitere Rastverbindungen (8, 10) ausgebildet sind, **dadurch gekennzeichnet, dass** wenigstens ein Randarm (1) eine Anzahl von durch Seitenschenkel (6) begrenzten Aufnahmeräumen (7) zum Aufnehmen von länglichen Gegenständen (21) aufweist, die in verbundener Anordnung der Randarme (1, 2) und des oder jedes Innenarmes (3) geschlossen sind, und dass an Seitenschenkeln (6) randseitig Schürzenaufnahmen (17) und an wenigstens einem Randarm (2) sowie an dem oder jedem Innenarm (3) Anschlagschürzen (16) ausgebildet sind, die bei zusammengefügter Anordnung der Randarme (1, 2) und des oder jedes Innenarmes (3) in den Schürzenaufnahmen (17) angeordnet sind.

2. Vorrichtung nach Anspruch 1, **dadurch gekennzeichnet, dass** an dem oder einem Innenarm (3) über ein Scharnier (26) wenigstens ein Seitenarm (25) angebracht ist, an dem Seitenschenkel (6) mit durch die Seitenschenkel (6) begrenzten Aufnahmeräumen (7) zum Aufnehmen von länglichen Gegenständen (21) schwenkbar angebracht sind.

3. Vorrichtung nach Anspruch 2, **dadurch gekennzeichnet, dass** der oder jeder Seitenarm (25) Schürzenaufnahmen (17) und Anschlagschürzen (16) aufweist, die in Eingriff mit an Seitenschenkeln (6) ausgebildeten Schürzenaufnahmen (17) beziehungsweise Anschlagschürzen (16) von Randarmen (1, 2) beziehungsweise wenigstens eines Innenarmes (3) sind.

4. Vorrichtung nach Anspruch 2 oder Anspruch 3, **dadurch gekennzeichnet, dass** der oder jeder Seitenarm (25) über wenigstens eine Rastverbindung (8, 20) mit dem Innenarm (3) verbindbar ist, an dem der Seitenarm (25) angebracht ist.

5. Vorrichtung nach einem der Ansprüche 1 bis 4, **dadurch gekennzeichnet, dass** die Randarme (1, 2) und der oder jeder Innenarm (3) eine Durchbruchausnehmung (11) aufweist, wobei die Durchbruchausnehmungen (11) in zusammengefügter Anordnung der Randarme (1, 2) und des oder jedes Innenarmes (3) miteinander fluchten.

## Claims

1. Device for fastening elongate objects (21), having a first edge arm (1) and a second edge arm (2) which can be fastened to one another, wherein at least one inner arm (3) is provided which is arranged between the edge arms (1, 2) and which has receptacle spaces (7) delimited by side limbs (6) for receiving elongate objects (21), wherein the edge arms (1, 2) and the or each inner arm (3) are pivotably fastened to one another by means of a hinge arrangement (4, 5), wherein the edge arms (1, 2) and the or each inner arm (3) are fastenable to one another, in each case, by means of a snap-lock fastening (8, 10, 20), respectively arranged opposite the hinge arrangement (4, 5) and wherein in the region of the hinge arrangement (4, 5), further snap-lock fastenings (8, 10) are provided, **characterised in that** at least one edge arm (1) has a number of receptacle spaces (7) delimited by side limbs (6) for receiving elongate objects (21), said elongate objects being enclosed in the fastened arrangement of the edge arms (1, 2) and of the or each inner arm (3), and **in that** cover receptacles (17) are formed on side limbs (6) at the edge side and on at least one edge arm (2) and on the or each inner arm (3), stop covers (16) are formed which, in the assembled arrangement of the edge arms (1, 2) and of the or each inner arm (3), are arranged in the cover receptacles (17).

2. Device according to claim 1, **characterised in that** at least one side arm (25) is pivotably mounted on the or an inner arm (3) by means of a hinge (26), on which side arm, side limbs (6) with receptacle spaces (7) delimited by said side limbs (6) for receiving elongate objects (21) are arranged.

3. Device according to claim 2, **characterised in that** the or each side arm (25) has cover receptacles (17) and stop covers (16) which are in engagement with cover receptacles (17) formed on side limbs (6) or stop covers (16) of edge arms (1, 2) or of at least one inner arm (3).

4. Device according to claim 2 or claim 3, **characterised in that** the or each side arm (25) is fastenable by means of at least one snap-lock fastening (8, 20) to the inner arm (3) on which the side arm (25) is mounted.

5. Device according to one of the claims 1 to 4, **characterised in that** the edge arms (1, 2) and the or each inner arm (3) has a break-through recess (11), wherein in the assembled arrangement of the edge arms (1, 2) and of the or each inner arm (3), the break-through recesses (11) align with one another.

## Revendications

1. Dispositif destiné à immobiliser en position des objets de grande longueur (21) comprenant un premier segment de rive (1) et comprenant un deuxième segment de rive (2) qui peuvent être mis en liaison d'accouplement l'un avec l'autre, dans lequel il est prévu au moins un segment intérieur (3) qui est disposé entre les segments de rive (1, 2) et qui comporte des logements de réception (7) délimités par des branches latérales (6) pour l'emmanchement d'objets de grande longueur (21), dans lequel les segments de rive (1, 2) ainsi que le ou chaque segment intérieur (3) peuvent être raccordés ensemble par un mouvement de pivotement à partir d'une liaison articulée (4, 5), dans lequel les segments de rive (1, 2) ainsi que le ou chaque segment intérieur (3) peuvent être raccordés les uns aux autres par un dispositif d'accrochage (8, 10, 20) respectivement disposé sur le côté opposé à la liaison articulée (4, 5) et dans lequel il est prévu, dans la zone correspondant à la liaison articulée (4, 5) d'autres systèmes de mise en prise d'accouplement par accrochage, **caractérisé en ce qu'**au-moins un segment de rive (1) comporte un certain nombre de logements de réception (7) délimités par des branches latérales (6), pour l'emmanchement d'objets de grande longueur (21) qui, dans la position d'assemblage des segments de rive (1, 2) et du ou de chaque segment intérieur (3), sont fermés, et **en ce qu'**il est prévu, au niveau de branches latérales (6), en portion de rive, des logements de réception à tablier (17) et au-moins au niveau d'un segment de rive (2) ainsi qu'au niveau du ou de chaque segment intérieur (3), des tabliers de butée (16) qui, lorsque les segments de rive (1, 2) et le ou chaque segment intérieur (3) sont assemblés en prise d'encastrement réciproque, sont disposés dans les logements de réception à tablier (17).

2. Dispositif selon la revendication 1, **caractérisé en ce que** qu'il est prévu, sur le ou un segment intérieur (3), au-moins un segment de rive (25) agencé selon une disposition articulée, au niveau duquel il est prévu, avec une possibilité de pivotement, des branches latérales (6) comportants des logements de réception (7) délimités par des branches latérales (6) pour l'emmanchement d'objets de grande longueur (21).

3. Dispositif selon la revendication 2, **caractérisé en ce que** le ou chaque segment de rive (25) comporte des logements de réception à tablier (17) et des tabliers de butée (16), qui sont en prise d'encastrement réciproque avec des logements de réception à tablier (17) faisant partie intégrante de branches latérales (6) et, ou encore, de tabliers de butée (16) de segments de rive (1, 2) et, ou encore, d'au-moins un segment intérieur (3).

4. Dispositif selon la revendication 2 ou la revendication 3, **caractérisé en ce que** le ou chaque segment de rive (25) est susceptible d'être mis, par au-moins un système de raccordement par accrochage (8, 20), en liaison d'accouplement avec le segment intérieur (3) sur lequel le segment de rive (25) est disposé.

5. Dispositif selon l'une des revendications 1 à 4, **caractérisé en ce que** les segments de rive (1, 2) et le ou chaque segment intérieur (3) comportent un évidement formant ouverture débouchante (11), les évidements formant ouverture débouchante (11) étant en l'occurrence respectivement disposées dans un même plan d'alignement lorsque les segments de rive (1, 2) et le ou chaque segment intérieur (3) se trouvent dans leur position d'assemblage en prise d'encastrement réciproque.
